Europäisches Patentamt

(19) European Patent Office

Office européen des brevets

(11) Publication number: **0 109 918**
**B1**

(12) **EUROPEAN PATENT SPECIFICATION**

(45) Date of publication of patent specification: **30.12.86**

(21) Application number: **83630191.1**

(22) Date of filing: **18.11.83**

(51) Int. Cl.⁴: **F 16 D 65/14,** F 16 D 65/34, F 16 D 55/24

(54) **Disk brake actuator.**

(30) Priority: **22.11.82 US 443347**

(43) Date of publication of application:
**30.05.84 Bulletin 84/22**

(45) Publication of the grant of the patent:
**30.12.86 Bulletin 86/52**

(84) Designated Contracting States:
**FR GB IT**

(56) References cited:
**GB-A-1 491 486**
**GB-A-1 585 412**
**US-A-3 659 683**
**US-A-4 381 049**

(73) Proprietor: **GOODYEAR AEROSPACE CORPORATION**
**1210 Massillon Road**
**Akron, OH 44315 (US)**

(72) Inventor: **Crossman, Richard Lloyd**
**386 Mark Drive**
**Tallmadge Ohio 44278 (US)**
Inventor: **Mason, Paul Joseph**
**700 Hancock Avenue, Apt A8**
**Akron Ohio 44314 (US)**

(74) Representative: **Weyland, Joseph Jean Pierre**
**Goodyear International Tire Technical Center**
**Patent Department Avenue Gordon Smith**
**L-7750 Colmar-Berg (LU)**

Courier Press, Leamington Spa, England.

## Description

Background of the Invention

This invention generally relates to disk brakes and more particularly to disk brake actuators which provide a pressure force on a multi-disk stack of alternately splined stationary and rotating disk brake elements. The multi-disk stack, when interacting in an axial direction by reason of the pressure force, effect a frictional engagement between them and impart braking action to a rotating wheel in response to an operator requirement in the well known and understood manner.

More specifically, the invention relates to electric brake actuators as opposed to hydraulic actuators which are commonly in use at the present time. Electric actuators of the type alluded to are being proposed for various aircraft disk brake applications wherein the present hyraulic systems are considered for replacement by what is termed in the industry as "brake-by-wire" electric brake systems. Electric brake actuators of the type being proposed are more specifically described in U.S. Patent No. 4,381,049 issued to Richard L. Crossman entitled, "Electrically Actuated Aircraft Brake."

The application of a spring force in a brake actuating direction to apply a brake is already known in the art and such is described and illustrated in GB—A—1 585 412 to Twiflex Couplings Limited.

Further, the application of a spring force as a return mechanism in conjunction with a roller screw device which converts a rotational input to a linear output motion is already known in the art and such is described and illustrated in US—A—3 659 683 to Betzing.

Typically, and as mentioned above, aircraft brake systems include a multi-disk stack of stationary and rotating elements which, when interacting in an axial direction, effect a frictional engagement and impart braking action to a rotating wheel. Engagement of the disk elements is effected by a plurality of axially positioned actuators each of which acts upon an annular portion of a brake pressure plate. This is a well-known brake configuration and, of course, initiation of the brake engagement is in response to a signal received from the pilot operating a foot pedal control as the requirement for braking action is recognized. However, the actuators in accordance with this invention are responsive to an electrical signal and comprise high torque electric motors which effect, through a ball screw mechanism, an axial force on the pressure plate at the end of the brake disk stack. The motors are assisted in either brake actuation or brake deactivation modes of operation by high torque springs which are mounted in various configurations and apply torque output in a manner to be more fully described hereinafter.

In light of the foregoing, and in accordance with one aspect of the invention, it is an object to provide disk brake actuation using spring assisted electric torque motors to achieve a maximum braking force with the smallest torque requirement for the motors.

In accordance with another aspect of the invention, it is an object to provide spring assisted torque motor actuators for "brake-by-wire" aircraft disk brake systems that operate in both forward and reverse mode to provide both activation and deactivation of the disk brake system.

In accordance with still another aspect of the invention, it is an object to provide disk brake actuators utilizing high torque springs in conjunction with high torque electric motors as torque modifiers to increase the pressure force on a brake pressure plate and thus increase compression of the disk stack elements.

Summary of the Invention

The invention provides an improved brake assembly which is characterized by a single high torque spring mounted between the brake pressure plate and the ball-screw mechanism, one end of the spring is connected to the ram while the opposite end is connected to the ring gear, said spring providing a torque force to the ring gear to assist rotational motion thereof when the torque motors are activated by an electrical signal indicative of a requirement for braking action of the rotating member.

Brief Description of the Drawings

FIGURE 1 is a sectional elevational view of a portion of a disk brake assembly showing a disk brake actuator in accordance with this invention;

FIGURE 2 is a sectional elevational view of a portion of a disk brake assembly similar to Figure 1 showing a second embodiment of a spring assisted ball-screw, high-torque motor actuator;

FIGURE 3 is a sectional elevational view of a portion of a disk brake assembly similar to Figure 1 of another embodiment comprising high torque springs in alternate positions with torque motors; and

FIGURE 4 is a partial sectional elevational view taken at one position through the brake actuator and illustrating another way a high torque spring may be applied to effect increased compressive force on the disk brake stack.

Detailed Description of the Invention

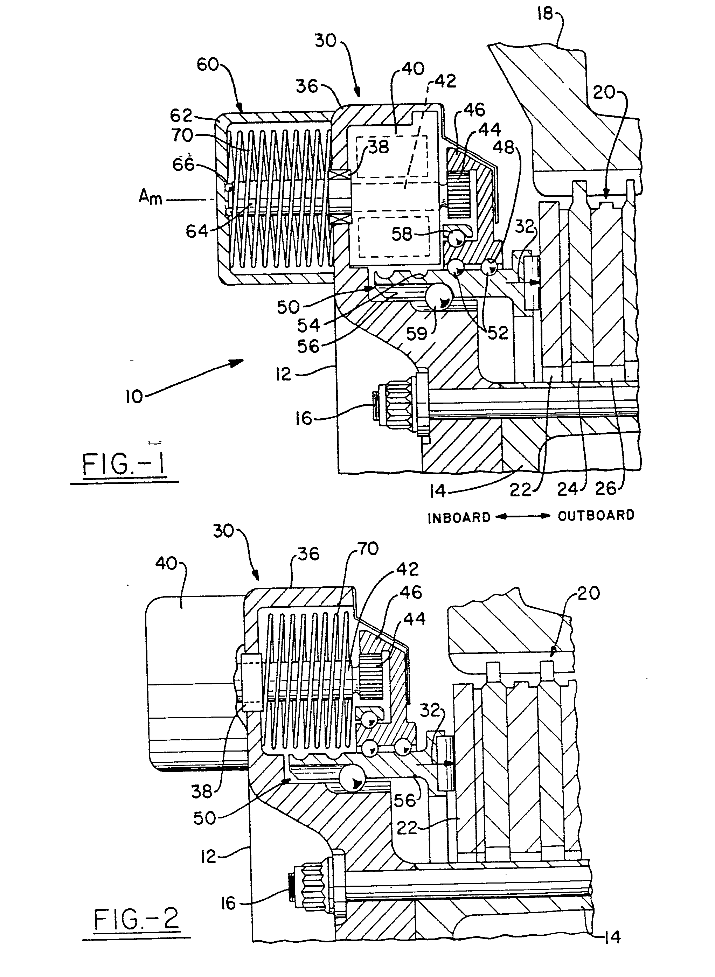

Referring to the drawings, Figure 1 is a sectional view through one portion of a substantially annular disk brake assembly generally indicated by reference numeral 10. A complete assembly will naturally be centered about an axis coincident with a vehicle axle (now shown). The assembly 10 conventionally includes a brake housing 12 having a torque tube 14 fixedly attached thereto via a plurality of circumferentially positioned bolts 16. The brake housing 12 and torque tube 14 form a relatively stationary portion at the inboard end of the assembly 10 with the vehicle body and axle as with respect to a wheel 18 rotatably mounted on the axle at the outboard end of the assembly.

The assembly 10 further includes a brake disk stack generally indicated at 20, an annular pressure plate 22, and a plurality of circumferentially positioned brake actuators 30. The disk stack 20 is comprised of a plurality of rotatable friction disks 24 that are keyed about an outer peripheral edge to the wheel 18 and a plurality of stationary friction disks 26 in an alternating arrangement with respect to the disks 24 and keyed about an inner peripheral edge to the torque tube 14. The pressure plate 22 is positioned at the inboard end of the brake disk stack 20 on the torque tube 14 and in a position such that the actuators 30 effect a pressure force on it in the axial direction illustrated via arrow 32. Compression of the brake disk stack is thus accomplished.

Conventionally, the brake actuators 30 comprise a piston mechanism driven by a hydraulic pressure force controlled by hydraulic circuitry in response to foot pedal activation in the aircraft cockpit to move a member into forceful engagement with the brake pressure plate 22. However, in accordance with the teachings of the beforementioned U.S. Patent No. 4,381,049 the actuators 30 each comprise an electric torque motor 40 which drives a ball-screw mechanism 50 such that a pressure force is exerted on the pressure plate 22. Each motor 40 has a rotatable shaft 42 and a mounted pinion gear 44 that engages a ring gear 46 so as to effect rotation thereof in the usual manner of such gear drives. The ball-screw mechanism 50 comprises a plurality of balls 52 received in screw slots 54 in a ball-screw ram 56, which balls 52 are also in communication with a ball race 48 in the ring gear 46. Thus, rotation of the ring gear 46 by the motor drive pinion 44 results in and translates to a linear movement of the ball-screw ram 56 in the direction of arrow 32 so as to engage the pressure plate 22 and effect braking action. Further, and so as to maintain the ring gear 46 in proper alignment, a thrust ball 58 and anti-rotation ball 59 are provided as essential elements of the ball-screw mechanism.

Now therefore, and in accordance with this present invention, the torque output of the motor 40 via its shaft 42 to rotate the ring gear 46 is modulated by a spring-assist mechanism generally indicated by reference numeral 60. The mechanism 60 comprises a housing 62 affixed to the inboard end of the actuator 30 and positioned in coaxial alignment with the motor drive shaft 42 on an axis $A_m$. The actuator housing indicated by reference numeral 36 has an opening through which an extension 64 of the motor drive shaft 42 passes. A bearing 38 mounts the shaft in the opening and a thrust ball 66 maintains the shaft stability at its most inboard position in the housing 62. Also mounted within the housing 62 is a high torque spring 70 that is positioned about the shaft extension 64 and having one of its ends affixed to the housing wall while the opposite end is affixed to the motor drive shaft extension. The attachment of the ends of the spring 70 to either the stationary housing or to the rotatable shaft is of course dependent upon whether the spring has a right-turn or left-turn orientation, the type being purely a matter of choice.

The spring 70 may be used to modulate the torque output of the motor drive shaft 42 in either of two modes of operation. For example, the spring 70 may be initially wound when the brake is "off" and in a non-actuation condition. When brake actuation is desired and an energization signal is received which activates the torque motor 40, the spring 70 adds to the torque output of the motor shaft by unwinding in the direction of the shaft output torque. A high torque output is therefore transmitted to the pinion gear 44 to move the ball-screw ram 56 via the ring gear 46 and brake actuation is realized. Alternatively, when the torque motor 40 is reversed by a proper signal to deactivate brake actuation, the spring 70 is wound to its pre-existing condition to be ready for the next requirement for braking action.

According to the other mode of operation, spring 70 is mounted on shaft 64 in an initially unwound condition. In this circumstance when the requirement for braking action is initiated and motor 40 energized to advance the ball-screw ram 56 into engagement with the pressure plate 22, spring 70 is wound in the direction of shaft rotation. When brake engagement is released by a signal that reverses the motor 40, spring 70 unwinds towards its pre-existing condition and thus aids the reverse drive of the motor to move the ball-screw ram out of pressure plate engagement.

Turning now to Figure 2 of the drawings, an embodiment is illustrated wherein the positions of the motor 40 and spring 70 are exchanged. In this configuration the motor 40 is positioned inboard of the actuator housing 36 while the spring 70 is mounted within the housing and proximate the pinion 44. The embodiment of Figure 2 operates similarly to that described with reference to Figure 1 and it may also be applied to either modes of operation; i.e., brake engagement or brake disengagement.

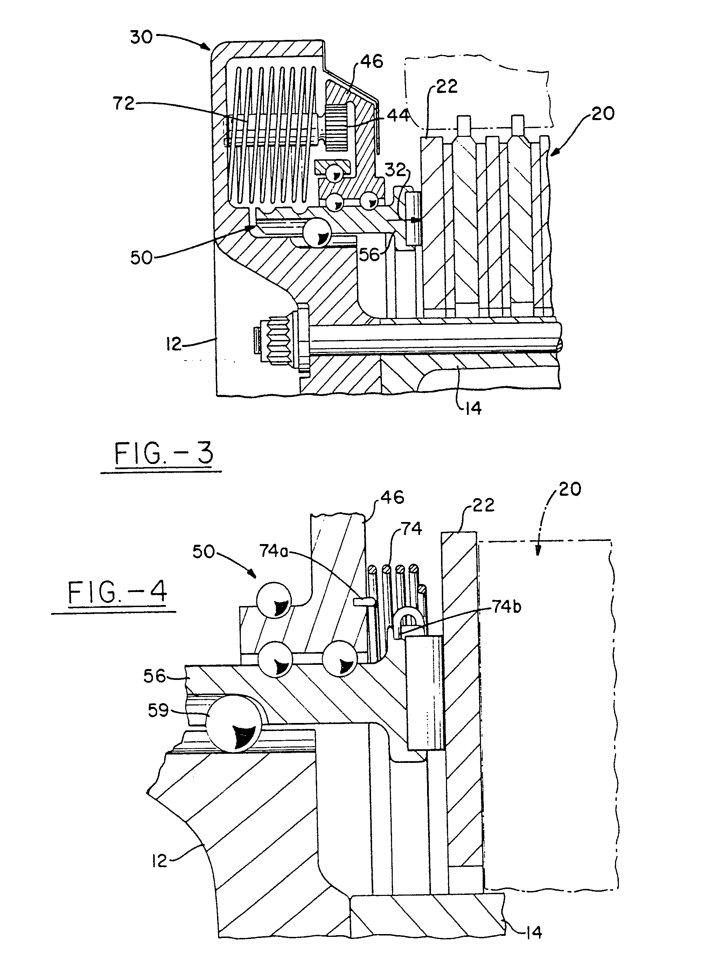

As mentioned herebefore, a complete brake assembly 10 includes a plurality of actuators 30 each acting on a circumferential portion of the brake pressure plate 22. In this respect and referring to Figure 3 of the drawings, alternate actuators 30 may comprise a spring assist mechanism indicated by reference numeral 72 and no electric torque motor is mounted in the same position. The spring mechanisms 72 may all be arranged to apply torque upon brake engagement initiation and thus assist motors 40 which are in the alternate positions in this mode of operation. Alternatively, only various of the spring mechanisms may be applied to brake engagement operation while others of the mechanisms 72 may be arranged for brake dis-engagement operation. Thus, both brake engagement assist and brake dis-engagement assist may be configured into the total brake assembly.

Referring now to Figure 4, the drawing illustrates another embodiment of the invention wherein a high torque spring 74 is positioned between the pressure plate 22 and the ball-screw mechanism 50. The spring 74 has one end 74a attached to the ring gear 46 while the opposite end 74b is attached to the ram 56. In this configuration and because the ring gear moves rotationally while the ram only moves linearly, the torque spring 74 applies a rotational torque force to the ring gear to assist it in moving the ram 56. Of course, the spring 74 may be wound so as to apply torque to the ring gear 46 for brake actuation or alternatively, it may be mounted so as to apply torque for brake de-activation. In the first instance the spring 74 will be pre-wound so as to unwind in the direction of ring gear rotation for brake actuation. In the second instance, the spring 74 will be normally unwound and will be wound upon brake actuation but will unwind and assist the ring gear reverse rotation for brake de-activation.

In all of the embodiments of the invention described, it will be recognized that a means may be provided to lock the spring in the wound condition. It is considered well within the knowledge of a person skilled in the art, for example, to position a locking arm within the spring mechanism to thus hold the spring wound and ready to apply work into the system. An electric solenoid may be used to operate the locking arm which solenoid may be operated by the same signal used for energization of the motors 40. Various other means may also be applied to automatically lock the springs 70, 72, and/or 74 in a wound condition and these are considered within the ability of a mechanic in the art.

## Claims

1. An improved brake assembly having a plurality of actuators (30) to provide a force on a pressure plate (22) associated with a brake disk stack (20) comprised of a plurality of interacting friction disks to compress the disk stack and effect braking of a rotating member, each of said actuators including an electric signal activated torque motor (40) having an output drive shaft and a pinion gear (44) driving a ball-screw mechanism (50) comprised of a ring gear (46) and a ball screw ram (56), the ring gear and ram interacting through ha plurality of balls (52) seated in a ball slot in the ring gear and a screw slot in the ram wherein rotational motion of the pinion drives the ring gear which effects a linear motion of the ram to apply a force on the brake pressure plate, the improvement characterized by:
a single high torque spring (74) mounted between the brake pressure plate (22) and the ball-screw mechanism (50), one end of the spring (74b) connected to the ram (56) while the opposite end (74a) is connected to the ring gear (46), said spring providing a torque force to the ring gear to assist rotational motion thereof when the torque motors are activated by an electrical signal indicative of a requirement for braking action of the rotating member.

2. The improved brake assembly as set forth in Claim 1 characterized by a spring (74) that is initially pre-wound such that activation of the torque motors effects unwinding of the spring in the same direction that the ring gear is rotated to assist in the brake actuation action.

3. The improved brake assembly as set forth in Claim 1 characterized by a spring (74) that is initially in an unwound condition and is wound by the ring gear when the torque motors are activated for brake actuation said spring providing output torque to the ring gear in the reverse direction to assist in deactivating the brake.

## Patentansprüche

1. Verbesserte Bremsanordnung mit einer Vielzahl von Stellorganen (30) zum Anlegen einer Kraft auf eine Druckplatte (22), die einem Bremsscheibenstapel (20) zugeordnet ist, der aus einer Vielzahl von aufeinander einwirkenden Reibungsscheiben besteht, um den Scheibenstapel zusammenzupressen und die Bremsung eines rotierenden Elementes zu bewirken, wobei jedes Stellorgan einen über ein elektrisches Signal aktivierten Drehmomentenmotor (40) mit einer Ausgangswelle und einem Zahnrad (44) aufweist, das einen Kugelumlaufspindelmechanismus (50) bestehend aus einem Hohlrad (46) und einer Kugelumlaufspindel (56) antreibt, wobei das Hohlrad und die Spindel über eine Vielzahl von Kugeln (52) aufeinander einwirken, die in einer Nut in dem Hohlrad und einer schraubenförmigen Nut in der Spindel angeordnet sind, wobei eine Drehung des Zahnrades das Hohlrad antreibt, wodurch eine lineare Bewegung der Spindel bewirkt wird, um eine Kraft auf die Druckplatte der Bremse aufzubringen, gekennzeichnet, durch eine einzige Feder (74) mit hoher Verdrehungskraft, die zwischen der Druckplatte (22) der Bremse und dem Kugelumlaufspindelmechanismus (50) angeordnet ist, wobei ein Ende (74b) der Feder mit der Spindel (56) verbunden ist, während das gegenüberliegende Ende (74a) mit dem Hohlrad (46) verbunden ist, und wobei die Feder eine Verdrehungskraft auf das Hohlrad ausübt, um dessen Drehung zu unterstützen, wenn der Drehmomentenmotor durch ein elektrisches Signal aktiviert wird, welches eine erforderliche Bremsbetätigung für das Drehelement signalisiert.

2. Bremsanordnung nach Anspruch 1, gekennzeichnet durch eine Feder (74), die ursprünglich derart vorgewickelt ist, daß die Betätigung des Drehmomentenmotors ein Abwickeln der Feder in derselben Richtung, in welcher das Hohlrad gedreht wird, bewirkt, um den Bremsbetätigungsvorgang zu unterstützen.

3. Bremanordnung nach Anspruch 1, gekennzeichnet durch eine Feder (74), die ursprünglich in einem abgewickelten Zustand ist und die von dem Hohlrad gewickelt wird, wenn der Drehmomentenmotor zur Betätigung der Bremse betätigt wird, sodaß die Feder eine Ausgagsverdrehungskraft auf das Hohlrad in der umgekehrten Richtung bewirkt, um die Inaktivierung der Bremse zu unterstützen.

## Revendications

1. Assemblage de frein perfectionné comportant plusieurs actionneurs (30) destinés à exercer une force sur un plateau de pression (22) associé à un empilage de disques de frein (20) constitué de plusieurs disques de friction à action réciproque en vue de comprimer l'empilage de disques et d'effectuer le freinage d'un organe en rotation, chacun de ces actionneurs comprenant un moteur de couple (40) actionné par un signal électrique et comportant un arbre de commande de sortie, ainsi qu'un pignon (44) entraînant un mécanisme à vis à billes (50) constitué d'une couronne dentée (46) et d'un piston plongeur à vis à billes (56), la couronne dentée et le piston plongeur agissant réciproquement à l'intervention de plusieurs billes (52) prenant appui dans une rainure ménagée dans la couronne dentée et une rainure de vis ménagée dans le piston plongeur, le mouvement de rotation du pignon ayant pour effet d'entraîner la couronne dentée qui imprime un mouvement linéaire au piston plongeur afin d'exercer une force sur le plateau de pression de freinage, caractérisé en ce qu'il comprend:

un seul ressort à couple élevé (74) monté entre le plateau de pression de freinage (22) et le mécanisme à vis à billes (50), une extrémité (74b) de ce ressort étant reliée au piston plongeur 56, tandis que son extrémité opposée (74a) est reliée à la couronne dentée (46), ce ressort appliquant une force de couple à la couronne dentée afin d'assister le mouvement de rotation de celle-ci lorsque les moteurs de couple sont actionnés par un signal électrique indiquant que l'organe en rotation doit être soumis à une action de freinage.

2. Assemblage de frein perfectionné selon la revendication 1, caractérisé par un ressort (74) qui est initialement préalablement bandé, de telle sorte que la mise en action des moteurs de couple ait pour effet de détendre le ressort dans la même direction que celle dans laquelle la ouronne dentée est entraînée en rotation, afin d'assister la mise en action du frein.

3. Assemblage de frein perfectionné selon la revendication 1, caractérisé par un ressort (74) qui est initialement dans un état détendu et qui est bandé par la couronne dentée lorsque les moteurs de couple sont actionnés en vue de la mise en action du frein, ce ressort appliquant un couple de sortie à la couronne dentée dans la direction inverse afin d'assister le désengagement du frein.

FIG.-1

FIG.-2

INBOARD ← → OUTBOARD

FIG.-3

FIG.-4